# EUROPÄISCHE PATENTSCHRIFT

(11) **EP 1 940 715 B1**
(45) Veröffentlichungstag und Bekanntmachung des Hinweises auf die Patenterteilung: **07.11.2018**
(21) Anmeldenummer: 06775203.0
(22) Anmeldetag: 21.09.2006
(51) Int. Cl.: B66B 1/46

(54) **AUFZUGSANLAGE ZUR BEFÖRDERUNG VON AUFZUGSBENUTZERN IN EINEM GEBÄUDEAREAL**
ELEVATOR SYSTEM FOR TRANSFERRING PASSENGERS AND/OR GOODS FROM AN ELEVATOR HALL
SYSTÈME D'ASCENSEUR POUR TRANSPORTER DES PASSAGERS ET/OU BIENS D'UN HALL D'ENTRÉE

(30) Priorität: 30.09.2005 EP 05109093
(43) Veröffentlichungstag der Anmeldung: 09.07.2008
(60) Teilanmeldung: 08166222.3
(73) Patentinhaber: Inventio AG, 6052 Hergiswil (CH)
(72) Erfinder: FINSCHI, Lukas, CH-6006 Luzern (CH)
(86) Internationale Anmeldenummer: PCT/CH2006/000510
(87) Internationale Veröffentlichungsnummer: WO 2007/036057

(56) Entgegenhaltungen:
- EP-A- 1 295 838
- EP-A- 1 475 754
- WO-A-00/40496
- WO-A2-03/027966
- DE-A1- 10 102 936
- DE-A1-102004 042 999
- US-A- 5 689 094
- US-A- 5 932 853
- US-A- 6 011 839
- US-A1- 2003 116 384
- US-B1- 6 397 976
- US-B1- 7 093 693
- PATENT ABSTRACTS OF JAPAN Bd. 2003, Nr. 12, 5. Dezember 2003 (2003-12-05) & JP 2004 315127 A (MITSUBISHI ELECTRIC CORP), 11. November 2004 (2004-11-11)
- PATENT ABSTRACTS OF JAPAN Bd. 2003, Nr. 12, 5. Dezember 2003 (2003-12-05) & JP 2004 262619 A (TOSHIBA ELEVATOR CO LTD), 24. September 2004 (2004-09-24)

## Beschreibung

Die Erfindung bezieht sich auf ein Verfahren zum Betreiben einer Aufzugsanlage zur Beförderung von Aufzugsbenutzern in einem Gebäudeareal. Weiter bezieht sich die Erfindung auf eine Aufzugsanlage zur Durchführung des obigen Verfahrens.
Aus der EP 0 699 617 B1 ist eine Aufzugsanlage mit einer Erkennungsvorrichtung bekannt, bei der ein Aufzugsbenutzer einen Informationsgeber mit sich trägt, der von Erkennungsvorrichtungen abgefragt wird, die am Eingang zu den Aufzügen angebracht sind. Die auf dem Informationsgeber abgespeicherten Daten werden der Aufzugssteuerung weitergeleitet, um den Aufzug entsprechend den gespeicherten Daten zu steuern.

In der EP 1 295 838 A1 wird eine Steuereinrichtung zur Beförderung von Personen/Gütern mit Hilfe von Benutzerprofilen beschrieben. In den Benutzerprofilen der Steuereinrichtung sind individuelle Förderpräferenzen der Personen/Güter gespeichert. Es ist eine Erkennungsvorrichtung vorgesehen, die einen Identifikationscode einer/s Person/Guts erkennt. Für jeden erkannten Identifikationscode wird ein Benutzerprofil der/s zu befördernden Person/Guts bereitgestellt. Die Aufzugsanlage wird von einer Steuereinrichtung angesteuert. Diese Ansteuerung basiert in Teilen auf dem Benutzerprofil und umfasst vielfältige aufzugsspezifische Angaben wie das Einsteige- und Zielstockwerk der/s zu befördernden Person/Guts. Es ist jedoch nicht möglich, festzustellen, ob die/das zu befördernde Person/Gut auch tatsächlich gemäss dem Benutzerprofil befördert wird.

In der US6397976 ist ein weiteres Verfahren zum Betreiben einer Aufzugsanlage beschrieben, in der verschieden beacon (20,24,25) automatische Kabinenrufe sowie Zielstockrufe für einen Aufzugsbenutzer aktivieren.

Die Benutzer einer Aufzugsanlage können sowohl Personen als auch Güter sein und werden im Folgenden als Aufzugsbenutzer bezeichnet.

In Gebäudearealen, die über eine Vielzahl von Aufzügen verfügen, wird häufig über eine Zielrufsteuerung eine Zuweisung der Aufzüge zu einzelnen Aufzugsbenutzern vorgenommen. Die Aufzugsbenutzer müssen dann keine Kabinenrufe mehr tätigen. Es ist bekannt, am Eingang von derartigen Gebäudearealen eine Zugangskontrolle einzurichten, um solchen Aufzugsbenutzern, die sich identifizieren können, Zutritt zu gewähren und um anderen Aufzugsbenutzern, die sich nicht identifizieren können, den Zutritt zu verwehren. Allerdings verfügen Gebäudeareale häufig über öffentliche und private bzw. firmeninterne Bereiche, sodass am Eingang des Gebäudeareals sowohl Aufzugsbenutzer eingelassen werden, die Zutritt zu den privaten Bereichen im Gebäudeareal haben, als auch Aufzugsbenutzer eingelassen werden, die nur Zutritt zu den öffentlichen Bereichen haben. Die Kontrolle und Überprüfung der Zutrittsberechtigungen in Gebäudearealen ist somit nicht einfach zu realisieren.

Der weitere Aufenthalt oder auch die Bewegung der Aufzugsbenutzer im jeweiligen Gebäudeareal lässt sich nun nur mit hohem Aufwand überwachen. So ist es beispielsweise möglich, dass ein nicht berechtigtes Aufzugsbenutzer mit in eine Aufzugskabine einsteigt, die in einen privaten Bereich fährt und somit Zugang zu den privaten Bereichen erlangt. Eine Absicherung dieser privaten Bereiche für derartige Fälle ist bisher nur durch aufwändige Überwachung oder durch weitere Zutrittskontrollen in den privaten Bereichen möglich. Solche Absicherungen benötigen einen geschulten, oft bewaffneten Sicherheitsdienst sowie spezielle und massive Vorrichtungen. All dies wirkt einschüchternd und ist unschön anzusehen.

**Aufgabe** der Erfindung ist es deshalb, in einem Gebäudeareal, welches über Bereiche mit unterschiedlichen Zutrittsberechtigungen verfügt, eine Aufzugsanlage und ein Verfahren anzugeben, mit denen der Aufenthalt von Aufzugsbenutzern in dem Gebäudeareal ohne grossen Aufwand überwacht und überprüft werden kann, um ein wirkungsvolles Ansteuern der Aufzugsanlage bzw. Eingreifen eines Sicherheitsdienstes zu ermöglichen.

Zur **Lösung** dieser Aufgabe wird ein Verfahren zum Betreiben einer Aufzugsanlage gemäss Patentanspruch 1 und eine Aufzugsanlage gemäss Patentanspruch 9 vorgeschlagen.

Vorteilhafte Ausgestaltungen sind den Unteransprüchen zu entnehmen.
Ein im Gebäudeareal zu befördernder Aufzugsbenutzer kann zum Starten der Beförderung mit der Aufzugsanlage entweder einen Zielruf oder eine Kombination eines Aufzugsrufs mit einem Kabinenruf auslösen. Ein Aufzugsruf ist ein Ruf, bei dem nur der Einsteigeort an eine Aufzugssteuerung übermittelt wird. Die Aufzugssteuerung weist dem entsprechenden Aufzugsbenutzer eine Aufzugskabine zu. Nach dem Besteigen der Kabine löst der Aufzugsbenutzer in der Kabine einen Kabinenruf aus. Der Kabinenruf wird an die Aufzugssteuerung übermittelt und die Kabine befördert daraufhin der Aufzugsbenutzer vom Einsteigeort zum entsprechenden Stockwerk befördert, welches dem Zielort des Kabinenrufs entspricht. Ein Zielruf ist ein Ruf, bei nicht nur der Einsteigeort sondern auch der Zielort an eine Aufzugssteuerung übermittelt werden. Die Aufzugssteuerung weist dem entsprechenden Aufzugsbenutzer eine Aufzugskabine zu, die diesem Aufzugsbenutzer vom Einsteigeort zum entsprechenden Stockwerk befördert, welches dem Zielort des Zielrufs entspricht, und dies ohne das vom Aufzugsbenutzer ein weiterer Kabinenruf auszulösen ist.
Kern der Erfindung ist es, von den Aufzugsbenutzern im Gebäudeareal die Position zu erfassen. Wenn von einem erfassten Aufzugsbenutzer ein Zielruf bzw. Aufzugsruf ausgelöst wird, und wenn dieser Zielruf bzw. Aufzugsruf von einer zugeordneten Aufzugskabine bedient wird, wird die Position eines erfassten Aufzugsbenutzers, der eine Aufzugskabine bestiegen hat, mit der Position desjenigen Aufzugsbenutzers verglichen, der den Zielruf bzw. Aufzugsruf ausgelöst hat. Falls der Aufzugsbenutzer einen Aufzugsruf ausgelöst hat, löst er in der Kabine einen Kabinenruf aus. Weiter basiert die Erfindung darauf, den Aufzugsbenutzern Zutrittsberechtigungen zu Gebäudebereichen zu erteilen. So wird in der Aufzugskabine überprüft, ob der erfasste Aufzugsbenutzer eine Zutrittsberechtigung für einen Zielort besitzt, der dem Zielruf bzw. Kabinenruf entspricht.

In einer vorteilhaften Ausgestaltung der Erfindung ist es möglich zu überprüfen, ob alle Aufzugsbenutzer, die in einer Aufzugskabine befördert werden, auch einen Zielruf bzw. Aufzugsruf ausgelöst haben. Falls ein Aufzugsbenutzer nicht über eine entsprechende Zutrittsberechtigung für den Zielort verfügt, kann eine Sicherheitsmassnahme ausgelöst werden. Und wenn festgestellt wird, dass in der Aufzugskabine ein Aufzugsbenutzer befindlich ist, das keinen Zielruf bzw. Aufzugsruf ausgelöst hat, wird ebenfalls eine Sicherheitsmassnahme ausgelöst.

Insbesondere ist es vorteilhaft, wenn sich der Aufzugsbenutzer, der einen Zielruf bzw. Aufzugsruf auslöst, identifizieren muss. Dies kann beispielsweise über eine Eingabetastatur erfolgen, in die ein Code eingegeben wird. Alternativ kann dies drahtlos über eine Chipkarte vorgenommen werden. Die Identifizierung ist auch durch Passworteingabe über ein Eingabeterminal möglich. Zusätzlich zur Identifizierung ist auch eine Authentifizierung möglich. Diese Gegen-Überprüfung oder Authentifizierung erhöht die Sicherheit im Gebäudeareal. Beispielsweise erfolgt die Authentifizierung durch biometrische Erkennungssysteme eines Gesichts, einer Iris, eines Fingerabdrucks, der Sprache, usw.. Besonders vorteilhaft ist es, wenn der Aufzugsbenutzer, welcher einen Zielruf bzw. Aufzugsruf auslöst, sich sowohl identifiziert als auch authentifiziert. Allenfalls kann die Identifikation und die Authentifizierung in einem Schritt erfolgen.

Besonders vorteilhaft ist es in einer weiteren Ausgestaltung der Erfindung, wenn die Anzahl der Aufzugsbenutzer, die einen Zielruf bzw. Aufzugsruf ausgelöst haben und in ihrer Position erfasst worden sind, ermittelt wird und mit der Anzahl der Aufzugsbenutzer verglichen wird, die eine Aufzugskabine bestiegen haben. Somit lässt sich überprüfen, ob eine Differenz zwischen der Anzahl existiert. Sollte die Anzahl der Aufzugsbenutzer, die einen Zielruf bzw. Aufzugsruf ausgelöst haben bzw. erfasst wurden von der Anzahl der Aufzugsbenutzer, die eine Aufzugskabine bestiegen haben, abweichen, besteht ein erhöhtes Sicherheitsrisiko.

Besonders vorteilhaft ist es, wenn bei einer Nicht-Übereinstimmung der Position des Aufzugsbenutzers, der die Aufzugskabine bestiegen hat, mit der Position des einen Zielruf bzw. Aufzugsruf auslösenden Aufzugsbenutzers, der von der Aufzugskabine bedient wird, eine Sicherheitsmassnahme vorgenommen wird. Diese Sicherheitsmassnahme kann beispielsweise ein Überwachen der betroffenen Flure durch installierte Sicherheitskameras nach sich ziehen. Eine andere Möglichkeit ist das persönliche Überprüfen der betroffenen Flure durch Sicherheitskräfte.

Weitere Möglichkeiten bestehen darin, die Aufzugssteuerung zu beeinflussen und gegebenenfalls die Bereiche im Gebäudeareal nicht mehr anzufahren, die eine hohe Sicherheitsstufe aufweisen. Somit wird wirkungsvoll verhindert, dass nicht berechtigte Aufzugsbenutzer in diese Hochsicherheitsbereiche gelangen.

Bei der Erfassung der Position von Aufzugsbenutzern kann sowohl die räumliche Position erfasst werden, als auch eine zeitliche Position eines Aufzugsbenutzers in einem Gebäudeareal. Die räumliche Position kann dabei unterschiedlich stark aufgelöst sein. So kann sie einfachsten Falls die Information enthalten, auf welcher Ebene sich ein Aufzugsbenutzer befindet. Es ist aber ebenso möglich, eine Ebene in mehrere Sektoren zu unterteilen und zusätzlich zu der Ebenen-Information auch noch eine Sektor-Information hinzuzufügen. Alternativ oder auch in Kombination zur räumlichen Position kann die zeitliche Position eines Aufzugsbenutzers erfasst werden. So kann beispielsweise festgestellt werden, wenn ein Aufzugsbenutzer zu einem Zeitpunkt ein Gebäudeareal betreten hat und nach einer fest voreingestellten Zeitperiode keinen Zielruf bzw. Aufzugsruf getätigt hat, dieser Aufzugsbenutzer sich möglicherweise unberechtigt irgendwo in einem anderen Gebäudebereich aufhält. Weiter ist es somit möglich, dass Aufzugsbenutzer, denen einen nur in einem bestimmten Zeitfenster ein Zutritt zu den Gebäudeabschnitten erlaubt ist, zu Zeiten, in denen sie normalerweise keinen Zutritt zum Gebäudeareal haben, eine erhöhte Überwachung zuteil wird.

Die Aufzugsbenutzer können Personen oder Güter sein. Die Güter werden vorzugsweise von Personen befördert. Durch die Überwachung eines Beförderungsgutes kann sichergestellt werden, dass die entsprechenden Güter nur in die dafür vorgesehenen Gebäudeebenen transportiert werden können.

Die Aufgabe wird auch durch eine Aufzugsanlage gelöst, die mehrere Aufzugskabinen umfasst. Weiter ist eine Positionserfassungsvorrichtung am Gebäudeeingang und/oder im Gebäudeareal und/oder in Aufzugskabinen angeordnet. Die Aufzugsanlage umfasst Eingabeterminals zur Eingabe eines Aufzugsrufs. Weiter ist eine Aufzugssteuerung zur Steuerung der einzelnen Aufzugskabinen vorgesehen. Eine Hauptsteuereinheit ist sowohl mit einer Erfassungs- als auch Identifizierungseinheit, einer Zutrittsberechtigungseinheit, Eingabeterminals für Aufzugsrufe und mit den Aufzugskabinen verbunden.

Nachfolgend wird die Erfindung anhand von Ausführungsbeispielen näher erläutert, die in schematischer Weise in den Zeichnungen dargestellt sind. Hierbei zeigen:
- Figur 1: eine schematische Darstellung einer Aufzugsanlage gemäss der vorliegenden Erfindung;
- Figur 2: ein Flussablaufdiagramm für ein Verfahren gemäss der vorliegenden Erfindung.

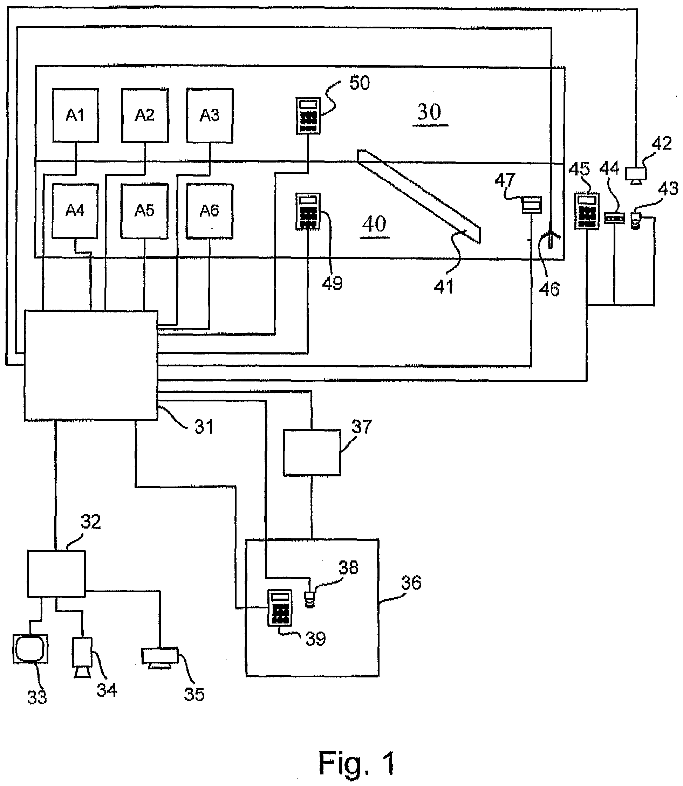

Die erfindungsgemässe Aufzugsanlage befindet sich in einem Gebäudeareal. Das Gebäudeareal ist entweder ein Gebäude mit mehreren Ebenen wie ein Bürohaus, ein Krankenhaus, ein Einkaufszentrum, usw., oder es ist ein aus mehreren solchen Gebäuden bestehender Komplex wie ein Fabrikgelände, eine Sportanlage, usw.. Die Aufzugsanlage umfasst mehrere Aufzüge mit einer oder mehreren Aufzugskabine/n A1 bis A6 pro Aufzugsschacht. Der Aufzugsschacht verläuft durch mehrere Ebenen 30, 40 des Gebäudeareals. In den verschiedenen Ebenen des Gebäudeareals befinden sich Zugänge zum Aufzugsschacht. In Figur 1 sind die Zugänge zu den Aufzugskabinen A1 bis A3 in der zweiten Ebene 30 angeordnet und die Zugänge zu den Aufzugskabinen A4 bis A6 sind in der ersten Ebene 40 angeordnet. Die einzelnen Ebenen sind beispielsweise auch über Fahrsteige 41 und Treppenhäuser miteinander verbunden.

In jeder Ebene 30, 40 ist wenigstens ein Eingabeterminal 49, 50 zur Eingabe von Aufzugsrufen vorgesehen. Diese Eingabeterminals 49, 50 beinhalten beispielsweise eine Eingabetastatur und ein Display zur Anzeige einer zugewiesenen, den Zielruf bzw. Aufzugsruf bedienenden Aufzugskabine. Die Eingabeterminals sind vorteilhafterweise nahe der Zugänge zu den Aufzügen angeordnet. Die Eingabeterminals 49, 50 sind über elektronische Datenleitungen mit einer Hauptsteuereinheit 31 der Aufzugsanlage verbunden. Somit werden die Aufzugsrufe an die Hauptsteuereinheit 31 übermittelt.

Weiter ist im Gebäudeareal eine Positionserfassungsvorrichtung angeordnet, die einfachsten Falls durch eine Kamera 42 in einem Eingangsbereich des Gebäudeareals realisiert ist. Im Normalfall besteht die Positionserfassungsvorrichtung aus einer Vielzahl solcher Kameras, die überall im Gebäudeareal angebracht sind. Vorteilhafterweise werden alle für Aufzugsbenutzer im Gebäudeareal zugänglichen Wege von Kameras erfasst. Dabei weist jede Kamera einen spezifischen Erfassungsbereich auf. Benachbarte Kameras sind so angeordnet, dass sich ihr Erfassungsbereich zumindest bereichsweise überlappt. Ein Aufzugsbenutzer, der sich von einem ersten Erfassungsbereich in einen benachbarten zweiten Erfassungsbereich bewegt, wird somit zuerst nur von der ersten Kamera erfasst, sobald er einen Überlappungsbereich durchquert, wird er von beiden Kameras erfasst und danach nur von der zweiten Kamera. Vorteilhafterweise sind die Kameras mit einer Auswerteeinheit und einem Speichermedium verbunden. Die erfassten Aufzugsbenutzerpositionen werden von der Auswerteeinheit ausgewertet und auf dem Speichermedium als räumliche- und zeitliche Positionsdaten festgehalten. Durch Auswertung der Kamerasignale lässt sich laufend kontrollieren, wo sich ein Aufzugsbenutzer im Gebäudeareal gerade befindet. Für die Aufzugsbenutzererfassung eignen sich übliche digitale Flüssigkristalldisplay (LCD) Kameras, es lassen sich aber auch Bewegungssensoren wie Infrarot (IR) Detektoren oder Radar- und Ultraschallsensoren einsetzen. Die Auswerteeinheit kann eine Standard-Recheneinheit mit einem Programm zum Erkennen von Kamerasignalen in Form digitaler Bilder sein. Ein solches Erkennungsprogramm erlaubt beispielsweise eine Unterscheidung verschiedener Aufzugsbenutzer auf einem Kamerabild. Unterscheidungskriterien sind die Farbe, Grösse und Form von Aufzugsbenutzern oder auch die durch Bildvergleiche feststellbaren Differenzen zwischen Bildern verschiedener Kameras oder zwischen Bildern, die zu verschiedenen Zeitpunkten aufgenommen wurden. So lässt sich die Anzahl von Aufzugsbenutzern pro Kamerabild ermitteln. Auch erlaubt ein solches Erkennungsprogramm die Ermittlung der Bewegungsrichtung und Geschwindigkeit von Aufzugsbenutzern auf Kamerabildern. Mehrere solche Erkennungsprogramme sind kommerziell erhältlich.

Eine Identifizierungseinheit umfasst beispielsweise ein Eingabeterminal 45 mit einer numerischen Tastatur oder einen Kartenleser 44. Eine alternative Ausgestaltung umfasst einen drahtlosen Chipkartenleser 43, der beispielsweise auf Radiofrequenz-Identifikation (RFID) Chips gespeicherte Codes abfragen kann, die von den Aufzugsbenutzern getragen werden. Über diese derartig ausgetauschten Codes, die entweder eingegeben werden, von der Karte oder dem RFID Chip gelesen werden, wird ein Aufzugsbenutzer identifiziert. Nach einer Identifikation mittels der Identifizierungseinheit wird durch sich öffnende Türen oder frei gegebene Drehkreuze 46 ein Zugang ins Gebäudeareal gewährt. Bei der Identifikation bzw. nachdem ein Aufzugsbenutzer Zutritt zum Gebäudeareal erlangt hat, wird ihm mittels der Zutrittsberechtigungseinheit eine Zutrittsberechtigung zugewiesen.

Weiter umfasst die Aufzugsanlage eine Hauptsteuereinheit 31, an die sämtliche Komponenten der Aufzugsanlage angeschlossen sind. Die Hauptsteuereinheit kann auch durch Zusammenwirken mehrerer verteilter Steuereinheiten realisiert werden. Die Hauptsteuereinheit 31 ist mit einer Sicherheitseinheit 32 gekoppelt, die über mehrere Monitore 33, über Lautsprechereinheiten 34 und Kamerasysteme 35 verfügt. Die Kamera- und Lautsprechersysteme 34, 35 können über die Ebenen 30 und 40 bzw. weitere Ebenen im Gebäudeareal verteilt sein.

Weiter ist schematisch in Figur 1 eine Detailansicht einer Aufzugskabine A1-A6 dargestellt. Die Aufzugskabine 36 ist mit der Hauptsteuereinheit 31 gekoppelt. In der Aufzugskabine 36 befindet sich ebenfalls ein Eingabeterminal 39 mit einer numerischen Tastatur und einem Anzeigedisplay. Eine Alternative stellt ein RFID Chip-Reader 38 dar. Die Aufzugskabine 36 wird von einer Aufzugssteuerung 37 gesteuert, wobei die Aufzugssteuerung 37 ihre Befehle ebenfalls von der Hauptsteuereinheit 31 empfängt. Die Hauptsteuereinheit 31 führt zu jedem Aufzug ein Förderprofil mit allen notwendigen Daten zum Betreiben des Aufzugs. So umfasst ein Förderprofil dauernd aktualisierte Angaben über die Anzahl der Aufzugsrufe, die der Aufzugskabine 36 zugeordnet sind. Zu jedem Aufzugsruf protokolliert das Förderprofil die Einsteige- und die Zielebene und auch den Zeitpunkt zu dem der Zielruf bzw. Aufzugsruf ausgelöst wurde. Auch gibt das Förderprofil die Reihenfolge an, in der die Ziele von der Aufzugskabine 36 angefahren werden. Es ist daher besonders vorteilhaft, wenn auch die Positionsdaten und die Zutrittsberechtung eines jeden Aufzugsbenutzers an die Hauptsteuereinheit 31 übermittelt und im Förderprofil abgelegt werden. Die Hauptsteuereinheit 31 kann so jedem an einem Eingabeterminal 49, 50 getätigten Zielruf bzw. Aufzugsruf genau eine zeitlich aktuelle Aufzugsbenutzerposition und eine Zutrittsberechtigung des Aufzugsbenutzers zuordnen. Hierzu sind die Positionserfassungsvorrichtung und die Hauptsteuereinheit 31 über eine elektronische Datenleitung, beispielsweise ein Bussystem oder ein Netzwerk, miteinander verbunden.

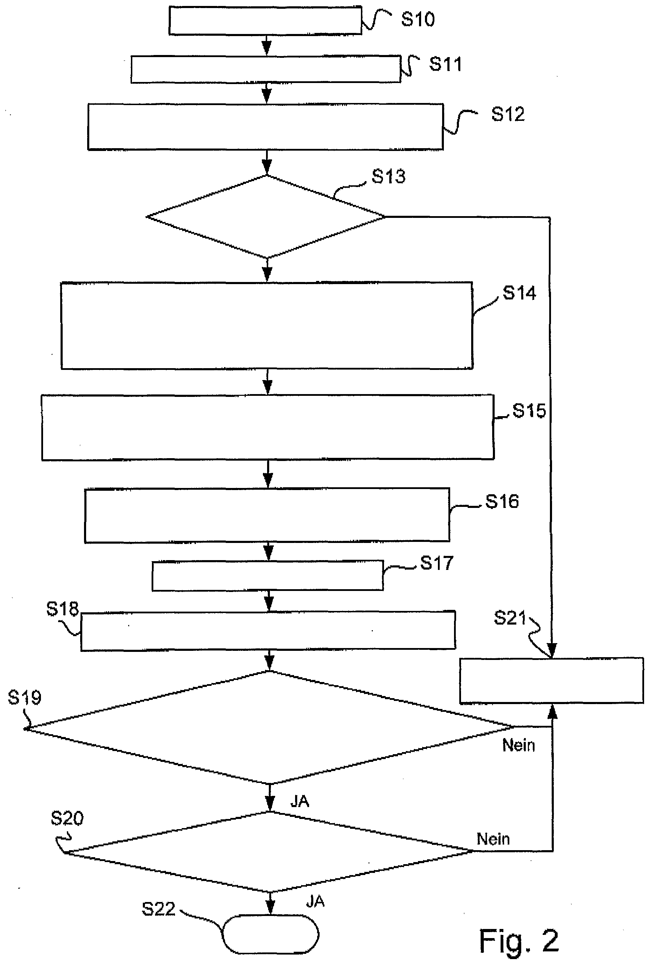

Im Folgenden wird ein erfindungsgemässes Verfahren gemäss Figur 2 erläutert. Nachdem ein Aufzugsbenutzer in Form einer Person oder eines Beförderungsgutes das Gebäudeareal betreten bzw. in das Gebäudeareal gebracht wurde S10, wird die Position des Aufzugsbenutzers in Schritt S11 erfasst. Nachdem die Position beispielsweise über die Kamera 42 erfasst wurde S11, wird der Aufzugsbenutzer identifiziert bzw. authentifiziert S12. Diese Identifizierung bzw. Authentifizierung erfolgt beispielsweise über ein Eingabeterminal 45, über einen Chipkarten-Reader 44 oder über ein drahtloses RFID Chip-Interface 43. Zur Authentifizierung des Aufzugsbenutzers erfasst beispielsweise ein biometrisches Erkennungssystem vom Aufzugsbenutzer ein Gesicht, eine Iris, einen Fingerabdruck, Sprache, usw.. In Schritt S13 wird überprüft, ob sich der Aufzugsbenutzer korrekt identifiziert bzw. authentifiziert hat und ob seine Position erfasst wurde. Im Fall, dass sich der Aufzugsbenutzer nicht identifiziert bzw. authentifiziert hat oder seine Position nicht erfasst wurde, wird eine Sicherheitsmassnahme S21 eingeleitet. Diese Sicherheitsmassnahme S21 kann beispielsweise umfassen, dass die Eingangstüren bzw. Drehkreuze 46 oder andersartige Barrieren blockiert werden oder blockiert bleiben, um ein gewaltsames Eindringen eines nicht berechtigten Aufzugsbenutzers zu verhindern. Nachdem sich der Aufzugsbenutzer korrekt identifiziert bzw. authentifiziert hat und seine Position erfasst wurde, wird ihm in Schritt S14 eine Zugangsberechtigung erteilt. Dies kann einfachsten Falls ein Öffnen einer Tür sein bzw. ein Freigeben eines Drehkreuzes 46.

Nachdem der Aufzugsbenutzer das Gebäudeareal korrekt betreten hat, kann er sich beispielsweise von einer ersten Ebene 40 über eine Rolltreppe 41 in eine andere Ebene, beispielsweise eine zweite Ebene 30, begeben. Dabei wird die aktuelle Position des Aufzugsbenutzers laufend von der Positionserfassungsvorrichtung ermitttelt. Je nachdem, in welcher Ebene 30, 40 sich der Aufzugsbenutzer befindet, kann er in Schritt S15 an einem Eingabeterminal 49, 50 in der entsprechenden Ebene einen Zielruf bzw. Aufzugsruf eingeben. Dieser Zielruf bzw. Aufzugsruf wird beispielsweise über eine numerische Tastatur eingegeben und an die Hauptsteuereinheit 31 übertragen. Die Hauptsteuereinheit 31 weist dem Aufzugsbenutzer dann in Schritt S16 eine Aufzugskabine zu, die sich auf der entsprechenden Ebene befindet und beispielsweise vom Eingabeterminal 49 oder 50 in einem Display dargestellt wird.

In Schritt S17 betritt der erfasste Aufzugsbenutzer die ihm zugewiesene Aufzugskabine.

Falls der Aufzugsbenutzer keinen Zielruf sondern einen Aufzugsruf gelöst hat, löst der Aufzugsbenutzer in Schritt S18 in der Aufzugskabine einen Kabinenruf.

Vorteilhafterweise wird in Schritt S19 die Anzahl bzw. Position der erfassten Aufzugsbenutzer in der Aufzugskabine überprüft. Dies erfolgt vorteilhafterweise durch das Erkennungsprogramm der Positionserfassungsvorrichtung. Stimmt beispielsweise die Anzahl der Aufzugsbenutzer, die sich der Aufzugskabine befinden, nicht mit der Anzahl der Aufzugsbenutzer überein, die dieser Aufzugskabine zugewiesen wurden, kann eine Sicherheitsmassnahme S21 ausgelöst werden. Alternativ oder zusätzlich kann in Schritt S19 eine Sicherheitsmassnahme ausgelöst werden, wenn die Position der Aufzugsbenutzer in der Aufzugskabine nicht mit der Position desjenigen Aufzugsbenutzers übereinstimmt, der den Zielruf bzw. Aufzugsruf getätigt hat. Im Falle einer Sicherheitsmassnahme wird eine Sicherheitsabteilung informiert, indem beispielsweise die Monitore 33 in der Sicherheitsabteilung direkt auf die betroffenen Ebenen umgeschaltet werden und in der Sicherheitsabteilung eine wahrnehmbare Nachricht ausgegeben wird.

In Schritt S20 wird überprüft, ob alle erfassten Aufzugsbenutzer, die in der Aufzugskabine befördert werden, auch über eine Zutrittsberechtigung für den Zielort verfügen. Besitzt einer der Aufzugsbenutzer keine solche Zutrittsberechtigung, kann wiederum eine Sicherheitsmassnahme S21 ausgelöst werden. Altelrnativ oder zusätzlich zur Sicherheitsmassnahme S21 ist es möglich, die Aufzugssteuerung 37 über die Hauptsteuereinheit 31 so zu beeinflussen, dass die Aufzugskabine 36 nicht in die hochsicherheitsrelevanten Ebenen fährt. Eine andere Möglichkeit ist es, die Aufzugskabine entweder zu blockieren, sodass sich in dieser Aufzugskabine befindliche Aufzugsbenutzer nicht aussteigen können. Eine andere Möglichkeit ist es, die Aufzugskabine direkt wieder zurück in den öffentlichen Bereich zu befördern und die Aufzugsbenutzer aussteigen zu lassen. Eine andere Möglichkeit ist es, mit der Aufzugskabine an einen Sicherheitshalt zu fahren wo eine Überprüfung durch Sicherheitspersonal erfolgen kann.

In Schritt S22 werden die derart erfassten und überprüften Aufzugsbenutzer mit der Aufzugskabine 36 an die Zielorte befördert.

Mit der vorliegenden Erfindung ist eine Erhöhung der Sicherheit in Gebäudearealen möglich. Insbesondere ist es möglich, eine unbefugte Bewegung von Aufzugsbenutzern aus öffentlichen Bereichen in private Bereiche zu verhindern. Durch die Möglichkeit der Beeinflussung der Aufzugskabinen können Sicherheitskräfte frühzeitig und wirkungsvoll eingreifen und somit einen Zugang von nichtberechtigten Aufzugsbenutzern zu Hochsicherheitsbereichen verhindern.

Weiter ist es möglich, die Aufzugssteuerung 37 über die Hauptsteuereinheit 31 gezielt zu beinflussen, dass genau jene Kontrolldaten berücksichtigt werden, welche den in der Kabine sich befindenden Aufzugsbenutzern entsprechen. So ist es z.B. möglich, einen verbesserten Aufzugsbetrieb zu ermöglichen, falls nicht alle dem Aufzug zugeordneten Aufzugsbenutzer den Aufzug betreten haben, indem beispielsweise nur genau jene Ziele angefahren werden, welche den tatsächlich beförderten Aufzugsbenutzern entsprechen.

## Patentansprüche

1. Verfahren zum Betreiben einer Aufzugsanlage zur Beförderung von Aufzugsbenutzern in einem Gebäudeareal, das Verfahren umfasst die Schritte:
a) Erfassen der Position von Aufzugsbenutzern im Gebäudeareal (S11),
b) Erteilen einer Zutrittsberechtigung der Aufzugsbenutzer zu Gebäudebereichen (S14),
c) Auslösen eines Zielrufs von einem erfassten Aufzugsbenutzer (S15),
d) Zuweisen einer den Zielruf bedienenden Aufzugskabine (S16),
e) Besteigen einer Aufzugskabine von mindestens einem erfassten Aufzugsbenutzer (S17),
g) Vergleichen, ob die Position des Aufzugsbenutzers, der die Aufzugskabine bestiegen hat, mit der Position des Aufzugsbenutzers übereinstimmt, der den Zielruf ausgelöst hat (S19), und
h) Bestimmen, ob der Aufzugsbenutzer, der die Aufzugskabine bestiegen hat, eine Zutrittsberechtigung für einen dem Zielruf entsprechenden Zielort besitzt (S20)
oder anstatt dieser Schritte die folgenden Schritte:
a) Erfassen der Position von Aufzugsbenutzern im Gebäudeareal (S11),
b) Erteilen einer Zutrittsberechtigung der Aufzugsbenutzer zu Gebäudebereichen (S14),
c) Auslösen eines Aufzugsrufs von einem erfassten Aufzugsbenutzer (S15),
d) Zuweisen einer den Aufzugsruf bedienenden Aufzugskabine (S16),
e) Besteigen einer Aufzugskabine von mindestens einem erfassten Aufzugsbenutzer (S17),
f) Auslösen eines Kabinenrufs von einem erfassten Aufzugsbenutzer (S18),
g) Vergleichen, ob die Position des Aufzugsbenutzers, der die Aufzugskabine bestiegen hat, mit der Position des Aufzugsbenutzers übereinstimmt, der den Aufzugsruf ausgelöst hat (S19), und
h) Bestimmen, ob der Aufzugsbenutzer, der die Aufzugskabine bestiegen hat, eine Zutrittsberechtigung für einen dem Kabinenruf entsprechenden Zielort besitzt (S20).

2. Verfahren nach Anspruch 1, **gekennzeichnet durch** den Schritt,
i) Auslösen einer Sicherheitsmassnahme (S21), wenn in Schritt g) die Position des Aufzugsbenutzers, der die Aufzugskabine bestiegen hat, nicht mit der Position des Aufzugsbenutzers übereinstimmt, der den Zielruf bzw. Aufzugsruf ausgelöst hat oder der Aufzugsbenutzer gemäss Schritt h) keine Zutrittsberechtigung für einen dem Zielruf bzw. Aufzugsruf entsprechenden Zielort besitzt.

3. Verfahren nach Anspruch 1 oder 2, **dadurch gekennzeichnet, dass** ein einen Zielruf bzw. Aufzugsruf auslösender Aufzugsbenutzer identifiziert wird (S12).

4. Verfahren nach einem der Ansprüche 1 bis 3, **dadurch gekennzeichnet, dass** ein einen Zielruf bzw. Aufzugsruf auslösender Aufzugsbenutzer identifiziert und authentifiziert wird (S12).

5. Verfahren nach einem der Ansprüche 1 bis 4, **dadurch gekennzeichnet, dass** die Anzahl der Zielruf bzw. Aufzugsruf auslösenden und erfassten Aufzugsbenutzer ermittelt wird und mit der Anzahl der Aufzugsbenutzer verglichen wird, die eine Aufzugskabine bestiegen haben.

6. Verfahren nach einem der Ansprüche 1 bis 5, **dadurch gekennzeichnet, dass** bei Nichtübereinstimmung der Position des Aufzugsbenutzers, der die Aufzugskabine bestiegen hat, mit der Position des einen Zieruf bzw. Aufzugsruf auslösenden Aufzugsbenutzers, der von dieser Aufzugskabine bedient wird, eine Sicherheitsmassnahme vorgenommen wird (S21).

7. Verfahren nach einem der Ansprüche 1 bis 6, **dadurch gekennzeichnet, dass** die Position eine räumliche Position und/oder eine zeitliche Position eines Aufzugsbenutzers im Gebäudeareal umfasst.

8. Verfahren nach einem der Ansprüche 1 bis 7, **dadurch gekennzeichnet, dass** ein Aufzugsbenutzer eine Person oder ein zu beförderndes Gut ist.

9. Aufzugsanlage konfiguriert zum:
a) Erfassen der Position von Aufzugsbenutzern im Gebäudeareal (S11),
b) Erteilen einer Zutrittsberechtigung der Aufzugsbenutzer zu Gebäudebereichen (S14),
c) Auslösen eines Zielrufs von einem erfassten Aufzugsbenutzer (S15),
d) Zuweisen einer den Zielruf bedienenden Aufzugskabine (S16),
e) Besteigen einer Aufzugskabine von mindestens einem erfassten Aufzugsbenutzer (S 17),
g) Vergleichen, ob die Position des Aufzugsbenutzers, der die Aufzugskabine bestiegen hat, mit der Position des Aufzugsbenutzers übereinstimmt, der den Zielruf ausgelöst hat (S19), und
h) Bestimmen, ob der Aufzugsbenutzer, der die Aufzugskabine bestiegen hat, eine Zutrittsberechtigung für einen dem Zielruf entsprechenden Zielort besitzt (S20) oder
anstatt dieser Schritte die folgenden Schritte:
a) Erfassen der Position von Aufzugsbenutzern im Gebäudeareal (S11),
b) Erteilen einer Zutrittsberechtigung der Aufzugsbenutzer zu Gebäudebereichen (S14),
c) Auslösen eines Aufzugsrufs von einem erfassten Aufzugsbenutzer (S 15),
d) Zuweisen einer den Aufzugsruf bedienenden Aufzugskabine (S16),
e) Besteigen einer Aufzugskabine von mindestens einem erfassten Aufzugsbenutzer (S17),
f) Auslösen eines Kabinenrufs von einem erfassten Aufzugsbenutzer (S18),
g) Vergleichen, ob die Position des Aufzugsbenutzers, der die Aufzugskabine bestiegen hat, mit der Position des Aufzugsbenutzers übereinstimmt, der den Aufzugsruf ausgelöst hat (S19), und
h) Bestimmen, ob der Aufzugsbenutzer, der die Aufzugskabine bestiegen hat, eine Zutrittsberechtigung für einen dem Kabinenruf entsprechenden Zielort besitzt (S20), und weiter Konfiguriert zum Durchführen der Verfahrensschritte gemäß der Ansprüche 2-8.

## Claims

1. A method for operating an elevator installation for transporting elevator users in a building area, the method comprising the steps:
a) detecting the position of elevator users in the building area (S11),
b) granting access authorization to the elevator users to building regions (S14),
c) triggering a destination call by a detected elevator user (S15),
d) allocating an elevator cab (S16) serving the destination call,
e) boarding an elevator cab by at least one detected elevator user (S17),
g) comparing whether the position of the elevator user who has boarded the elevator cab corresponds with the position of the elevator user who has triggered the destination call (S19); and
h) determining whether the elevator user who has boarded the elevator cab has an access authorization for a destination location corresponding with the destination call (S20),
or, instead of these steps, comprising the following steps:
a) detecting the position of elevator users in the building area (S11),
b) granting access authorization to the elevator users to building regions (S14),
c) triggering an elevator call by a detected elevator user (S15),
d) allocating an elevator cab (S16) serving the elevator call,
e) boarding an elevator cab by at least one detected elevator user (S17),
f) triggering a cab call by a detected elevator user (S18),
g) comparing whether the position of the elevator user who has boarded the elevator cab corresponds with the position of the elevator user who has triggered the elevator call (S19); and
h) determining whether the elevator user who has boarded the elevator cab has an access authorization for a destination location corresponding with the elevator call (S20).

2. The method as recited in Claim 1, **characterized by** the step:
i. triggering a safety measure (S21) if in step g) the position of the elevator user who has boarded the elevator cab does not correspond with the position of the elevator user who has triggered the destination call, or the elevator user according to step h) does not have an access authorization for a destination location corresponding with the destination call or elevator call.

3. The method as recited in Claim 1 or 2, **characterized in that** an elevator user triggering a destination call or elevator call is identified (S12).

4. The method as recited in one of Claims 1 to 3, **characterized in that** an elevator user triggering a destination call or elevator call is identified and authenticated (S12).

5. The method as recited in one of Claims 1 to 4, **characterized in that** the number of detected elevator users triggering the destination call or elevator call is determined and compared with the number of elevator users who have boarded an elevator cab.

6. The method as recited in one of Claims 1 to 5, **characterized in that** in the case of non-agreement of the position of the elevator user who has boarded the elevator cab with the position of the elevator user who has triggered a destination call or elevator call served by this elevator cab, a security measure is carried out (S21).

7. The method as recited in one of Claims 1 to 6, **characterized in that** the position comprises a spatial position and/or a temporal position of an elevator user in the building area.

8. The method as recited in one of Claims 1 to 7, **characterized in that** an elevator user is a person or is an item of goods to be transported.

9. An elevator installation configured to:
a) detect the position of elevator users in the building area (S11),
b) grant access authorization to the elevator users to building regions (S14),
c) trigger a destination call by a detected elevator user (S15),
d) allocate an elevator cab serving the destination call (S16),
e) board an elevator cab by at least one detected elevator user (S17),
g) compare whether the position of the elevator user who has boarded the elevator cab corresponds with the position of the elevator user who has triggered the destination call (S19); and
h) determine whether the elevator user who has boarded the elevator cab has an access authorization for a destination location corresponding with the destination call (S20), or,
instead of these steps, comprising the following steps:
a) detecting the position of elevator users in the building area (S11),
b) granting access authorization to the elevator users to building regions (S14),
c) triggering an elevator call by a detected elevator user (S15),
d) allocating an elevator cab (S16) serving the elevator call,
e) boarding an elevator cab by at least one detected elevator user (S17),
f) triggering a cab call by a detected elevator user (S18),
g) comparing whether the position of the elevator user who has boarded the elevator cab corresponds with the position of the elevator user who has triggered the elevator call (S19); and
h) determining whether the elevator user who has boarded the elevator cab has an access authorization for a destination location corresponding with the elevator call (S20), and further configured to carry out the method steps as recited in Claims 2 to 8.

## Revendications

1. Procédure pour exploiter une installation d'ascenseur pour le transport d'usagers dans une partie de bâtiment. La procédure comprend les étapes suivantes
a) Saisie de la position des usagers d'ascenseur dans la partie de bâtiment (p. 11),
b) Délivrance d'une autorisation d'accès aux usagers d'ascenseur pour des zones de bâtiment (p. 14),
c) Déclenchement d'un appel de destination d'un usager d'ascenseur répertorié (p. 15),
d) Attribution d'une cabine d'ascenseur correspondant à l'appel de destination (p. 16),
e) Embarquement d'au moins un usager d'ascenseur répertorié dans une cabine d'ascenseur (p. 17),
g) Comparaison de la position de l'usager de l'ascenseur ayant embarqué avec la position de l'usager de l'ascenseur ayant déclenché l'appel de destination (p. 19) et
h) Détermination si l'usager de l'ascenseur ayant embarqué dans la cabine d'ascenseur dispose d'une autorisation d'accès pour une destination correspondant à l'appel de destination (p. 20)
ou bien les étapes suivantes :
a) Saisie de la position des usagers d'ascenseur dans la partie de bâtiment (p. 11),
b) Délivrance d'une autorisation d'accès aux usagers d'ascenseur pour des zones de bâtiment (p. 14),
c) Déclenchement d'un appel d'ascenseur par un usager d'ascenseur recensé (p. 15),
d) Attribution d'une cabine d'ascenseur correspondant à l'appel d'ascenseur (p. 16),
e) Embarquement d'au moins un usager d'ascenseur répertorié dans une cabine d'ascenseur (p. 17),
f) Déclenchement d'un appel de cabine par un usager d'ascenseur recensé (p. 18),
g) Comparaison de la position de l'usager de l'ascenseur ayant embarqué dans la cabine avec la position de l'usager de l'ascenseur ayant déclenché l'appel de l'ascenseur (p. 19), et
h) Détermination si l'usager de l'ascenseur ayant embarqué dans la cabine dispose d'une autorisation d'accès pour une destination correspondant à l'appel de destination (p. 20).

2. Procédure selon exigence 1, **caractérisée par** l'étape
i. Déclenchement d'une mesure de sécurité (p. 21) lorsque lors de l'étape g), la position de l'usager de l'ascenseur ayant embarqué dans la cabine ne correspond pas à la position de l'usager de l'ascenseur ayant déclenché l'appel de destination ou l'appel d'ascenseur ou lorsque l'usager de l'ascenseur conformément à l'étape h) n'a pas d'autorisation d'accès pour la destination correspondant à l'appel de destination ou de l'ascenseur.

3. Procédure conformément à l'exigence 1 ou 2, **caractérisée par le fait que** l'usager d'ascenseur déclenchant un appel de destination ou d'ascenseur est identifié (p. 12).

4. Procédure selon une des exigences 1 à 3, **caractérisée par le fait que** l'usager d'ascenseur déclenchant un appel de destination ou d'ascenseur est identifié ou authentifié (p. 12).

5. Procédure selon une des exigences 1 à 4, **caractérisée par le fait que** le nombre d'appels de destination ou d'ascenseur déclenchés et d'usagers recensés est déterminé et comparé avec le nombre d'usagers d'ascenseur ayant embarqué dans une cabine.

6. Procédure selon une des exigences 1 à 5, **caractérisée par le fait qu'**en cas de discordance entre la position de l'usager de l'ascenseur ayant embarqué dans la cabine avec la position de l'usager ayant déclenché un appel de destination ou d'ascenseur correspondant à cette cabine, une mesure de sécurité sera prise (321).

7. Procédure selon une des exigences 1 à 6, **caractérisée par le fait que** la position comprend une position spatiale et/ou une position temporelle d'un usager d'ascenseur dans la partie de bâtiment.

8. Procédure selon une des exigences 1 à 7, **caractérisée par le fait qu'**un usager d'ascenseur est une personne ou un bien à transporter.

9. Installation d'ascenseur configurée pour :
a) Saisie de la position d'usagers d'ascenseur dans la partie de bâtiment (p. 11),
b) Délivrance d'une autorisation d'accès aux usagers d'ascenseur dans des zones de bâtiment (p. 14),
c) Déclenchement d'un appel de destination par un usager d'ascenseur recensé (p. 15),
d) Attribution d'une cabine d'ascenseur correspondant à l'appel de destination (p. 16),
e) Embarquement d'au moins un usager recensé dans une cabine d'ascenseur (p. 17),
g) Comparaison de la position de l'usager d'ascenseur ayant embarqué dans la cabine avec la position de l'usager d'ascenseur ayant déclenché l'appel de destination (p. 19), et
h) Détermination si l'usager d'ascenseur ayant embarqué dans la cabine dispose d'une autorisation d'accès pour une des destinations correspondant à l'appel de destination (p. 20)
ou bien les étapes suivantes :
a) Saisie de la position d'usagers d'ascenseur dans la partie de bâtiment (p. 11),
b) Délivrance d'une autorisation d'accès aux usagers d'ascenseur dans des zones de bâtiment (p. 14),
c) Déclenchement d'un appel d'ascenseur par un des usagers recensés (p. 15),
d) Attribution d'une des cabines correspondant à l'appel d'ascenseur (p. 16),
e) Embarquement dans une cabine d'ascenseur d'au moins un usager recensé (p. 17),
f) Déclenchement d'un appel de cabine par un usager d'ascenseur autorisé (p. 18),
g) Comparaison entre la position de l'usager ayant embarqué dans la cabine et la position de l'usager ayant déclenché l'appel d'ascenseur (p. 19) et
h) Détermination si l'usager d'ascenseur ayant embarqué dans la cabine dispose d'une autorisation d'accès pour une destination correspondant à l'appel de cabine (p. 20) et configuration ultérieure pour la réalisation des étapes de procédure conformément aux exigences 2 à 8.
